# EUROPEAN PATENT APPLICATION

(11) **EP 4 328 762 A1**
(43) Date of publication of application: **28.02.2024**
(21) Application number: 21937952.6
(22) Date of filing: 23.04.2021
(51) Int. Cl.: G06F 16/90

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: SAKAMOTO, Nobuhiro, Kawasaki-shi, Kanagawa 211-8588 (JP); KATAOKA, Masahiro, Kawasaki-shi, Kanagawa 211-8588 (JP); SUZUKI, Yasuhiro, Kawasaki-shi, Kanagawa 211-8588 (JP); FURUUCHI, Kiyoshi, Kawasaki-shi, Kanagawa 211-8588 (JP)
(74) Representative: Haseltine Lake Kempner LLP
(86) International application number: PCT/JP2021/016551
(87) International publication number: WO 2022/224462

(57) **Abstract**

The information processing device calculates vectors for a plurality of subtexts of text information included in a plurality of pieces of history information in which information on a plurality of question sentences and a plurality of response sentences is recorded. The information processing device executes training of a training model, based on training data that defines relationships between the vectors of some subtexts and the vectors of other subtexts among the plurality of subtexts. When accepting a new question sentence, the information processing device calculates the vectors of the subtexts by inputting the vectors of the new question sentence to the training model. The information processing device generates a response that corresponds to the new question sentence, based on the calculated vectors.

## Description

### FIELD

The present disclosure relates to an information processing program and the like.

### BACKGROUND

A list in which a question sentence frequently inquired from a company and a response sentence that is an answer to the question sentence are paired is disclosed, and a user can obtain a response sentence to a question sentence by using such a list. This list is called frequently asked questions (FAQ).

As a conventional technique using FAQ, there is a technique of, when a question sentence is accepted from a user, searching FAQ for a question sentence having a feature similar to the feature of the question sentence, and notifying the user of a response sentence to the question sentence searched for.

The company has to be responsible for the response sentence of FAQ, and it is unacceptable to confirm the response sentence with artificial intelligence (AI). Therefore, the work of examining a wide variety of question sentences that can be transmitted from users and appropriate response sentences to the question sentences and editing FAQ will be performed, and such a work is performed by an expert having specialized knowledge.

### SUMMARY

### TECHNICAL PROBLEM

However, the above-described conventional technique has a disadvantage that FAQ may not be efficiently edited.

In order to create FAQ, a large part depends on specialized knowledge of experts, and a work person who does not have specialized knowledge is not able to create FAQ, which involves time until FAQ is created. In recent years, since diverse new services are provided every day, it is expected to efficiently create FAQ.

In one aspect, an object of the present invention is to provide an information processing program, an information processing method, and an information processing device capable of efficiently editing FAQ.

### SOLUTION TO PROBLEM

In a first idea, a computer executes the following processing. The computer calculates vectors for a plurality of subtexts of text information included in a plurality of pieces of history information in which information on a plurality of question sentences and a plurality of response sentences is recorded. The computer executes training of a training model, based on training data that defines relationships between the vectors of some subtexts and the vectors of other subtexts among the plurality of subtexts. When accepting a new question sentence, the computer calculates the vectors of the subtexts by inputting the vectors of the new question sentence to the training model. The computer generates a response that corresponds to the new question sentence, based on the calculated vectors.

### ADVANTAGEOUS EFFECTS OF INVENTION

It is possible to efficiently edit FAQ.

### BRIEF DESCRIPTION OF DRAWINGS

FIG. 1 is a diagram (1) for explaining processing of an information processing device according to the present embodiment;
FIG. 2 is a diagram (2) for explaining processing of the information processing device according to the present embodiment;
FIG. 3 is a diagram (3) for explaining processing of the information processing device according to the present embodiment;
FIG. 4 is a diagram (4) for explaining processing of the information processing device according to the present embodiment;
FIG. 5 is a diagram illustrating a system according to the present embodiment;
FIG. 6 is a functional block diagram illustrating a configuration of the information processing device according to the present embodiment;
FIG. 7 is a diagram illustrating an example of a data structure of a fault report table;
FIG. 8 is a diagram illustrating an example of a data structure of an encoded file table;
FIG. 9 is a diagram illustrating an example of a data structure of dictionary information;
FIG. 10 is a diagram illustrating an example of a data structure of a vector table;
FIG. 11 is a diagram illustrating an example of a data structure of an inverted index table;
FIG. 12 is a flowchart (1) illustrating a processing procedure of the information processing device according to the present embodiment;
FIG. 13 is a flowchart (2) illustrating a processing procedure of the information processing device according to the present embodiment; and
FIG. 14 is a diagram illustrating an example of a hardware configuration of a computer that implements functions similar to the functions of the information processing device according to the embodiment.

### DESCRIPTION OF EMBODIMENTS

Hereinafter, embodiments of an information processing program, an information processing method, and an information processing device disclosed in the present application will be described in detail with reference to the drawings. Note that these embodiments do not limit the present invention.

### [Embodiments]

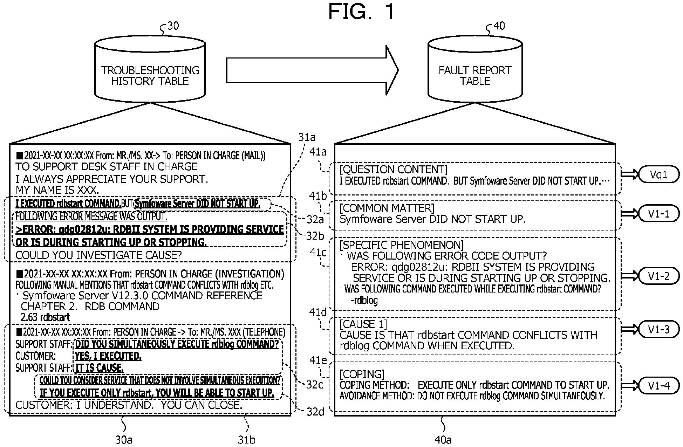

FIGs. 1 to 4 are diagrams for explaining processing of the information processing device according to the present embodiment. FIG. 1 will be described. The information processing device has a troubleshooting history table 30. A plurality of troubleshooting histories performed in the past is registered in the troubleshooting history table 30. FIG. 1 illustrates a troubleshooting history 30a. The troubleshooting history 30a includes an area 31a in which data of question sentences accepted from a customer in the past is recorded and an area 31b in which data of response sentences with which an operator responded to the question sentences is recorded.

The information processing device generates a fault report table 40, based on the troubleshooting history table 30. A plurality of fault reports is registered in the fault report table 40. In the example illustrated in FIG. 1, a fault report 40a is illustrated. For example, the information processing device generates the fault report 40a, based on the troubleshooting history 30a. Note that an administrator may refer to the troubleshooting history 30a to input information on the fault report 40a to the information processing device via an input device or the like.

The fault report 40a includes a subtext 41a relating to question content, a subtext 41b relating to a common phenomenon, a subtext 41c relating to a specific phenomenon, a subtext 41d relating to a cause, and a subtext 41e relating to coping.

The question content indicates the content of the question sentence. For example, the text included in the area 31a of the troubleshooting history table 30 forms the subtext 41a of the question content.

The common phenomenon indicates a phenomenon of a fault common to a plurality of question sentences. For example, the text included in the area 32a of the troubleshooting history 30a forms the subtext 41b of the common phenomenon. The information processing device makes comparison with the texts of the question sentences of other fault reports and specifies the text that represents the common phenomenon.

The specific phenomenon indicates a phenomenon of a fault specific to the question sentence of interest. For example, the text included in the area 32b of the troubleshooting history 30a forms the subtext 41c of the specific phenomenon. The information processing device makes comparison with the texts of the question sentences of other fault reports and specifies the text that represents the specific phenomenon.

The cause indicates a cause of occurrence of the fault. For example, the text included in an area 32c of the troubleshooting history 30a forms the subtext 41d of the cause.

The coping indicates a coping method for the fault. For example, the text included in an area 32d of the troubleshooting history 30a forms the subtext 41e of the coping.

The information processing device separately calculates vectors of the respective subtexts 41a to 41e included in the fault report 40a. The information processing device calculates a vector Vq1 of the question content from the subtext 41a. The information processing device calculates a vector V1-1 of the common phenomenon from the subtext 41b. The information processing device calculates a vector V1-2 of the specific phenomenon from the subtext 41c. The information processing device calculates a vector V1-3 of the cause from the subtext 41d. The information processing device calculates a vector V1-4 of the coping from the subtext 41e. A specific example in which the information processing device calculates a vector from text information such as a subtext will be described later.

The information processing device also calculates vectors of the subtexts of the question content, the common phenomenon, the specific phenomenon, the cause, and the coping for each of the plurality of fault reports included in the fault report table 40. In the following description, a vector calculated from the subtext of the question content will be expressed as a "question content vector". A vector calculated from the subtext of the common phenomenon will be expressed as a "common phenomenon vector". A vector calculated from the subtext of the specific phenomenon will be expressed as a "specific phenomenon vector". A vector calculated from the subtext of the cause will be expressed as a "cause vector". A vector calculated from the subtext of the coping will be expressed as a "coping vector".

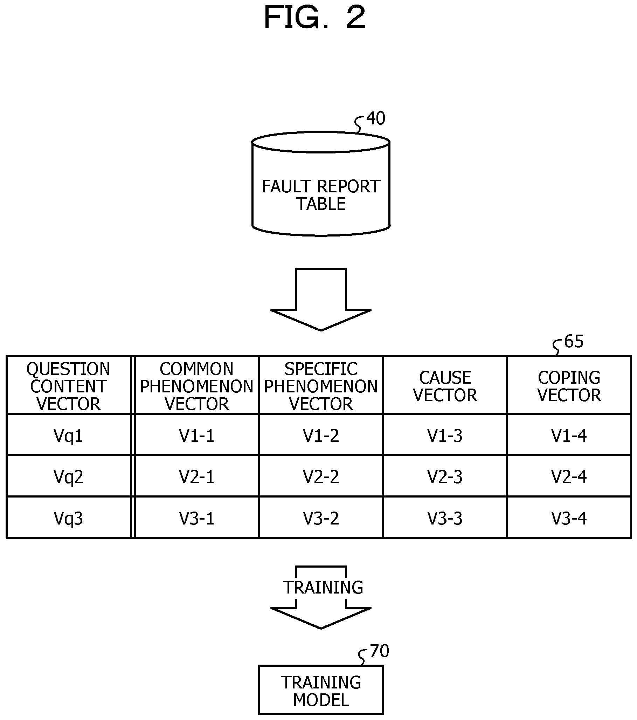

Description of FIG. 2 will be made. The information processing device generates a training table 65, based on each vector calculated from the plurality of fault reports in the fault report table 40. For example, the information processing device registers the question content vector, the common phenomenon vector, the specific phenomenon vector, the cause vector, and the coping vector that have been calculated from the same fault report, in the training table 65 in association with each other. The question content vector is data on the input side of a training model 70, and the common phenomenon vector, the specific phenomenon vector, the cause vector, and the coping vector are data on the output side (correct answer labels) of the training model 70.

The information processing device executes training of the training model 70, using the training table 65. The training model 70 corresponds to a convolutional neural network (CNN), a recurrent neural network (RNN), or the like. In the training model 70 of the present embodiment, it is assumed that the common phenomenon vector, the specific phenomenon vector, the cause vector, and the coping vector are separately output from different nodes in an output layer.

The information processing device executes training by back propagation such that the output when the question content vector is input to the training model 70 approaches the common phenomenon vector, the specific phenomenon vector, the cause vector, and the coping vector. The information processing device adjusts parameters of the training model 70 (executes machine learning) by repeatedly executing the above processing, based on the relationship between the "question content vector" and the "common phenomenon vector, specific phenomenon vector, cause vector, and coping vector".

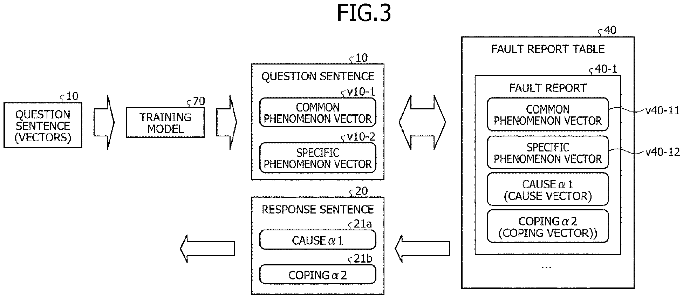

Description of FIG. 3 will be made. When a fault has occurred in a service being used, the customer operates a terminal device to create a question sentence 10 and transmits the created question sentence 10 to the information processing device. When accepting the question sentence 10 from the customer, the information processing device converts the question sentence 10 into vectors and calculates a common phenomenon vector v10-1 and a specific phenomenon vector v10-2 by inputting the converted vectors to the training model 70.

The information processing device separately compares the common phenomenon vector v10-1 and the specific phenomenon vector v10-2 with the common phenomenon vector and the specific phenomenon vector of each fault report stored in the fault report table 40. As a result of the comparison, the information processing device specifies a fault report 40-1 having similar common phenomenon vector and specific phenomenon vector.

For example, a fault report having a common phenomenon vector v40-11 and a specific phenomenon vector v40-12 similar to the common phenomenon vector v10-1 and the specific phenomenon vector v10-2 is assumed as the fault report 40-1. In these circumstances, the information processing device generates a response sentence 20 in which a cause α1 and coping o2 set in the fault report 40-1 are set and transmits the generated response sentence 20 to the terminal device of the customer.

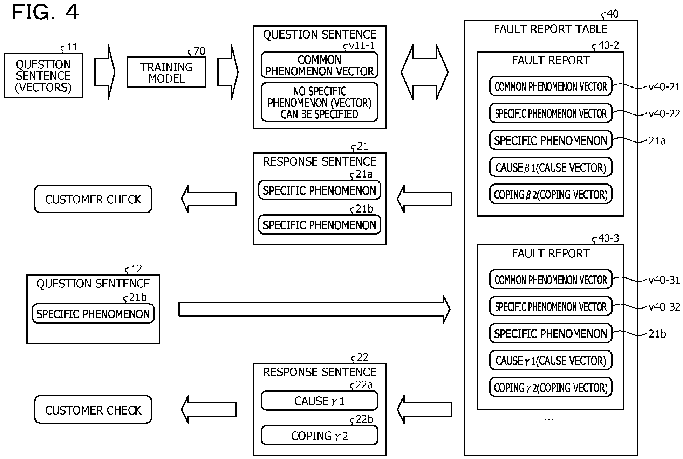

Description of FIG. 4 will be made. When a fault has occurred in a service being used, the customer operates a terminal device to create a question sentence 10 and transmits the created question sentence 10 to the information processing device. When accepting the question sentence 11 from the customer, the information processing device converts the question sentence 11 into vectors and calculates a common phenomenon vector v11-1 by inputting the converted vectors to the training model 70. Note that the information processing device does not specify the specific phenomenon vector when the value of the specific phenomenon vector output from the training model 70 does not fall within a predetermined range.

The information processing device separately compares the common phenomenon vector v11-1 with the common phenomenon vector of each fault report stored in the fault report table 40. As a result of the comparison, the information processing device specifies fault reports 40-2 and 40-3 having similar common phenomenon vectors. In this manner, when a plurality of fault reports has been specified, the information processing device generates a response sentence 21 and notifies the terminal device of the customer of the generated response sentence 21. The response sentence 21 includes a specific phenomenon 21a of the fault report 40-2 and a specific phenomenon 21b of the fault report 40-3.

The customer operates the terminal device to check the response sentence 21 and selects the specific phenomenon similar to the phenomenon in the service undergoing the occurrence from among the specific phenomena 21a and 21b to generate a question sentence 12. In the example illustrated in FIG. 4, the customer selects the specific phenomenon 21b to generate the question sentence 12 and transmits the generated question sentence 12 to the information processing device.

When accepting the question sentence 12, the information processing device specifies the fault report 40-3 corresponding to the specific phenomenon 21b included in the question sentence 12. The information processing device generates a response sentence 22 in which a cause γ1 and coping γ2 set in the fault report 40-3 are set and transmits the generated response sentence 22 to the terminal device of the customer.

As described above, the information processing device acquires a plurality of subtexts of the text data of the question content and the text data of the response content included in the fault report table 40, generates the training table 65 using the vector of each subtext, and executes training of the training model 70. When accepting a question sentence from a customer, the information processing device uses vectors calculated by inputting the vectors of the question sentence to the training model 70 to specify a fault report having relevant vectors and generates a response sentence. This may enable to efficiently create FAQ.

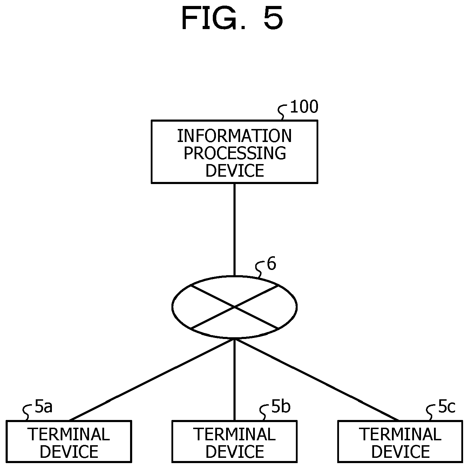

Next, a system according to the present embodiment will be described. FIG. 5 is a diagram illustrating a system according to the present embodiment. As illustrated in FIG. 5, this system includes terminal devices 5a, 5b, and 5c and an information processing device 100. The terminal devices 5a to 5c and the information processing device 100 are coupled with each other via a network 6.

The terminal devices 5a to 5c are terminal devices used by customers. In the following description, the terminal devices 5a to 5c will be collectively expressed as terminal devices 5. The customer operates the terminal device 5 to generate data of the question sentence and transmits the generated data to the information processing device 100. When receiving the data of the response sentence from the information processing device, the terminal device 5 displays information on the received response sentence.

The information processing device 100 generates the training model 70 by executing the processing described with reference to FIGs. 1 and 2 as preprocessing. When the data of the question sentence is received from the terminal device 5, the information processing device 100 generates data of the response sentence by executing the processing described with reference to FIGs. 3 and 4, using the training model 70, and transmits the generated data to the terminal device 5.

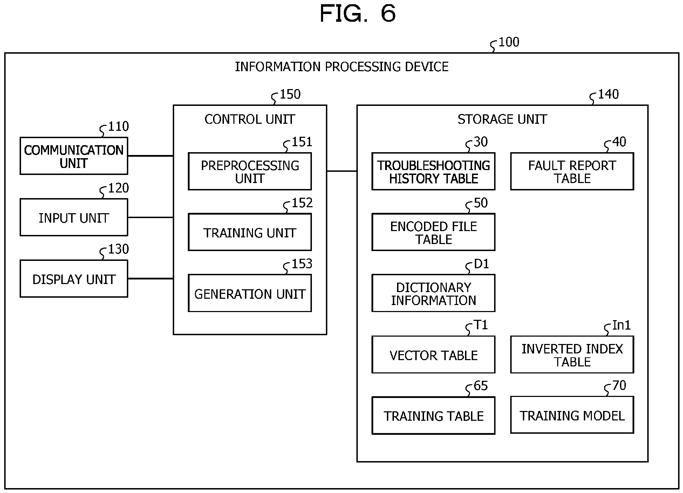

FIG. 6 is a functional block diagram illustrating a configuration of the information processing device according to the present embodiment. As illustrated in FIG. 6, this information processing device 100 includes a communication unit 110, an input unit 120, a display unit 130, a storage unit 140, and a control unit 150.

The communication unit 110 is coupled to an external device or the like in a wired or wireless manner and transmits and receives information to and from the terminal devices 5, the external device, or the like. For example, the communication unit 110 is implemented by a network interface card (NIC) or the like.

The input unit 120 is an input device that inputs various types of information to the information processing device 100. The input unit 120 corresponds to a keyboard, a mouse, a touch panel, or the like.

The display unit 130 is a display device that displays information output from the control unit 150. The display unit 130 corresponds to a liquid crystal display, an organic electro luminescence (EL) display, a touch panel, or the like.

The storage unit 140 includes a troubleshooting history table 30, a fault report table 40, an encoded file table 50, dictionary information D1, a vector table T1, an inverted index table In1, a training table 65, and a training model 70. The storage unit 140 is implemented by, for example, a semiconductor memory element such as a random access memory (RAM) or a flash memory, or a storage device such as a hard disk or an optical disc.

The troubleshooting history table 30 is a table in which an administrator or the like registers a plurality of troubleshooting histories performed in the past. The troubleshooting history table 30 corresponds to the troubleshooting history table 30 described with reference to FIG. 1.

The fault report table 40 includes a plurality of fault reports generated based on the troubleshooting history table 30. The fault report table 40 corresponds to the fault report table 40 described with reference to FIG. 1.

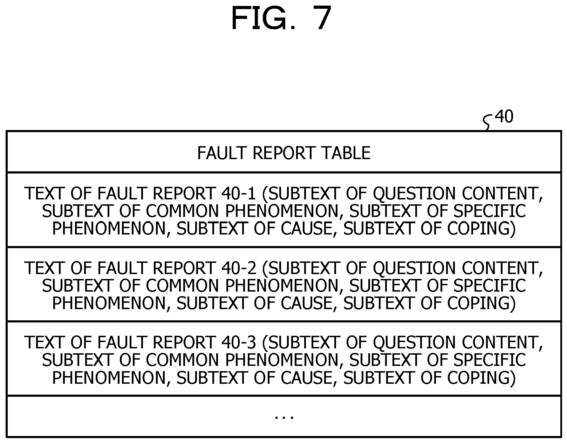

FIG. 7 is a diagram illustrating an example of a data structure of the fault report table. As illustrated in FIG. 7, the fault report table 40 includes a plurality of fault reports. As described with reference to FIG. 1, the text of the fault report includes the subtext of the question content, the subtext of the common phenomenon, the subtext of the specific phenomenon, the subtext of the cause, and the subtext of the coping. Although omitted in illustration, identification information that uniquely identifies the fault report is assigned to each fault report.

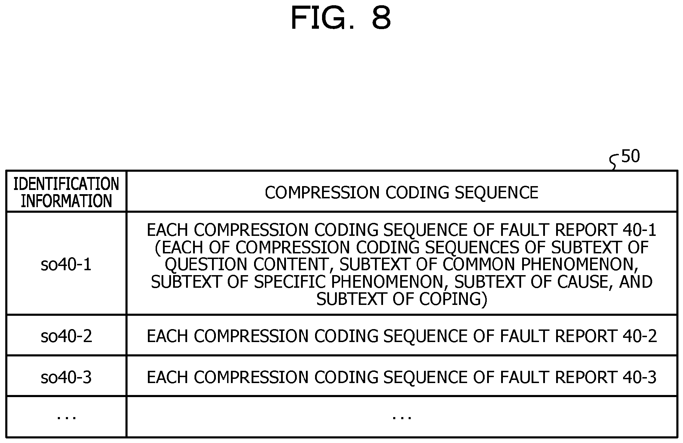

In the encoded file table 50, information obtained by encoding each fault report included in the fault report table 40 is registered. FIG. 8 is a diagram illustrating an example of a data structure of the encoded file table. As illustrated in FIG. 8, this encoded file table 50 associates identification information with a compression coding sequence.

The identification information is information that uniquely identifies the fault report that has been subjected to encoding. The compression coding sequence indicates a fault report encoded in units of words. The compression coding sequence includes a compression coding sequence obtained by encoding the subtext of the question content, a compression coding sequence obtained by encoding the subtext of the common phenomenon, and a compression coding sequence obtained by encoding the subtext of the specific phenomenon. In addition, the compression coding sequence includes a compression coding sequence obtained by encoding the subtext of the cause and a compression coding sequence obtained by encoding the subtext of the coping.

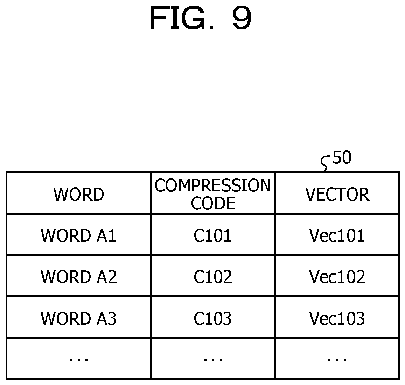

The dictionary information D1 is dictionary information that defines a compression code corresponding to a word. FIG. 9 is a diagram illustrating an example of a data structure of the dictionary information. As illustrated in FIG. 9, the dictionary information D1 associates a word, a code, and a vector. It is assumed that the vector corresponding to the compression code is allocated beforehand by Poincare embeddings or the like. Note that the vector of the compression code may be specified based on another conventional technique.

For the Poincare embeddings, for example, the technique described in Non-Patent Document "Valentin Khrulkov1 et al., "Hyperbolic Image Embeddings" Cornell University, April 3, 2019", or the like can be simply used. In the Poincare embeddings, a vector is allocated according to the embedded position in a Poincare space, and additionally, there is a characteristic that more similar pieces of information are embedded in closer positions. The information processing device 100 embeds the static code in the Poincare space in advance and previously calculates the vector for the static code.

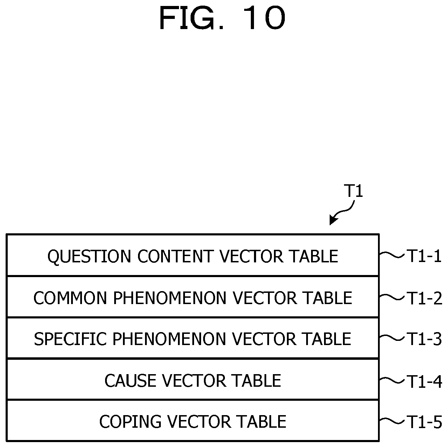

In the vector table T1, each of vectors calculated from the compression coding sequence of each subtext is registered. FIG. 10 is a diagram illustrating an example of a data structure of the vector table. As illustrated in FIG. 10, for example, the vector table T1 includes a question content vector table T1-1, a common phenomenon vector table T1-2, a specific phenomenon vector table T1-3, a cause vector table T1-4, and a coping vector table T1-5.

The question content vector table T1-1 associates the compression coding sequence of the subtext of the question content with the vector. The common phenomenon vector table T1-2 associates the compression coding sequence of the subtext of the common phenomenon with the vector. The specific phenomenon vector table T1-3 associates the compression coding sequence of the subtext of the specific phenomenon with the vector. The cause vector table T1-4 associates the compression coding sequence of the subtext of the cause with the vector. The coping vector table T1-5 associates the compression coding sequence of the subtext of the coping with the vector. Each vector table is omitted in illustration.

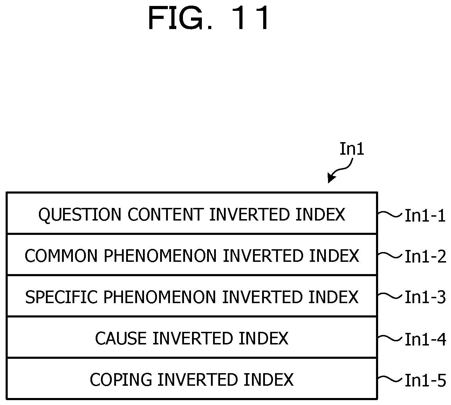

The inverted index table In1 defines an offset (the distance from the beginning of the encoded file table 50) of the compression coding sequence of each subtext. FIG. 11 is a diagram illustrating an example of a data structure of the inverted index table. As illustrated in FIG. 11, for example, the inverted index table In1 includes a question content inverted index In1-1, a common phenomenon inverted index In1-2, a specific phenomenon inverted index In1-3, a cause inverted index In1-4, and a coping inverted index In 1-5.

The question content inverted index In1-1 defines the compression coding sequence of the subtext of the question content and the offset. The common phenomenon inverted index In1-2 defines the compression coding sequence of the subtext of the common phenomenon and the offset. The specific phenomenon inverted index In1-3 defines the compression coding sequence of the subtext of the specific phenomenon and the offset. The cause inverted index In1-4 defines the compression coding sequence of the subtext of the cause and the offset. The coping inverted index In1-5 defines the compression coding sequence of the subtext of the coping and the offset.

The training table 65 stores data for training the training model 70. The description of the training table 65 corresponds to the description of the training table 65 made with reference to FIG. 2.

The training model 70 corresponds to a CNN, an RNN, or the like. In the training model 70 of the present embodiment, it is assumed that the common phenomenon vector, the specific phenomenon vector, the cause vector, and the coping vector are separately output from different nodes in an output layer.

The description returns to FIG. 6. The control unit 150 includes a preprocessing unit 151, a training unit 152, and a generation unit 153. The control unit 150 is implemented by, for example, a central processing unit (CPU) or a micro processing unit (MPU). In addition, the control unit 150 may be executed by, for example, an integrated circuit such as an application specific integrated circuit (ASIC) or a field programmable gate array (FPGA).

The preprocessing unit 151 executes processing of generating the fault report table 40, processing of calculating the vector, and processing of generating the training table 65.

Processing in which the preprocessing unit 151 generates the fault report table 40 will be described. This processing corresponds to the processing described with reference to FIG. 1. The preprocessing unit 151 generates the fault report table 40, based on the troubleshooting history table 30. For example, the preprocessing unit 151 refers to the troubleshooting history to specify the area in which the data of the question sentence is recorded and the area in which the data of the response sentence is recorded. The area in which the data of the question sentence is recorded and the area in which the data of the response sentence is recorded may be set in advance.

The preprocessing unit 151 extracts the text in the area in which the data of the question sentence is recorded, as the subtext of the question content. The preprocessing unit 151 makes comparison with the texts of the question sentences of the respective troubleshooting histories and specifies and extracts the subtext of the common phenomenon and the subtext of the specific phenomenon.

The preprocessing unit 151 extracts the subtext of the cause and the subtext of the coping from the text in the area in which the data of the response sentence is recorded.

Note that the administrator may refer to the troubleshooting histories and operate the input unit 120 to designate the subtext of the question content, the subtext of the common phenomenon, the subtext of the specific phenomenon, the subtext of the cause, and the subtext of the coping. The preprocessing unit 151 extracts the subtext of the question content, the subtext of the common phenomenon, the subtext of the specific phenomenon, the subtext of the cause, and the subtext of the coping, based on the designated information.

Processing in which the preprocessing unit 151 calculates the vector will be described. The preprocessing unit 151 extracts the subtext of the question content from the fault report table 40. The preprocessing unit 151 executes morphological analysis on the subtext of the question content and divides the subtext into a plurality of words. By comparing each divided word with the dictionary information D1 to allocate compression codes to the words, the preprocessing unit 151 generates the compression coding sequence of the question content. The preprocessing unit 151 registers the compression coding sequence of the question content in the encoded file table 50.

In addition, by comparing each divided word with the dictionary information D1 to allocate the vector of each word (compression code) and integrating the vectors of the words included in the subtext of the question content, the preprocessing unit 151 calculates the question content vector. The preprocessing unit 151 registers the compression coding sequence of the question content and the question content vector in the question content vector table T1-1 in association with each other. The preprocessing unit 151 registers the question content vector and the offset in the question content inverted index In1-1 in association with each other.

The preprocessing unit 151 also similarly generates the compression code of the common phenomenon and the common phenomenon vector for the subtext of the common phenomenon. The preprocessing unit 151 registers the compression coding sequence of the common phenomenon in the encoded file table 50. The preprocessing unit 151 registers the compression coding sequence of the common phenomenon and the common phenomenon vector in the common phenomenon vector table T1-2 in association with each other. The preprocessing unit 151 registers the common phenomenon vector and the offset in the common phenomenon inverted index In1-2 in association with each other.

The preprocessing unit 151 also similarly generates the compression code of the specific phenomenon and the specific phenomenon vector for the subtext of the specific phenomenon. The preprocessing unit 151 registers the compression coding sequence of the specific phenomenon in the encoded file table 50. The preprocessing unit 151 registers the compression coding sequence of the specific phenomenon and the specific phenomenon vector in the specific phenomenon vector table T1-3 in association with each other. The preprocessing unit 151 registers the specific phenomenon vector and the offset in the specific phenomenon inverted index In1-3 in association with each other.

The preprocessing unit 151 also similarly generates the compression code of the cause and the cause vector for the subtext of the cause. The preprocessing unit 151 registers the compression coding sequence of the cause in the encoded file table 50. The preprocessing unit 151 registers the compression coding sequence of the cause and the cause vector in the cause vector table T1-4 in association with each other. The preprocessing unit 151 registers the cause vector and the offset in the cause inverted index In 1-4 in association with each other.

The preprocessing unit 151 also similarly generates the compression code of the coping and the coping vector for the subtext of the coping. The preprocessing unit 151 registers the compression coding sequence of the coping in the encoded file table 50. The preprocessing unit 151 registers the compression coding sequence of the coping and the coping vector in the coping vector table T1-5 in association with each other. The preprocessing unit 151 registers the coping vector and the offset in the coping inverted index In1-5 in association with each other.

Meanwhile, in the above description, the relationships between each subtext of the fault report included in the fault report table 40 and the vectors are defined using the encoded file table 50, the vector table T1, and the inverted index table In1, but the definition is not limited to this. For example, the information processing device 100 may directly associate each subtext included in the fault report with each one of the vectors and set the associated subtext and vector in the fault report table 40.

Processing in which the preprocessing unit 151 calculates the training table 65 will be described. In the fault report, the preprocessing unit 151 registers the relationship between the "question content vector" and the "common phenomenon vector, specific phenomenon vector, cause vector, and coping vector" in the training table 65.

The preprocessing unit 151 generates the training table 65 by repeatedly executing the above processing in each fault report.

The training unit 152 executes training of the training model 70, using the training table 65. The training unit 152 executes training by back propagation such that the output when the question content vector is input to the training model 70 approaches the common phenomenon vector, the specific phenomenon vector, the cause vector, and the coping vector. The training unit 152 adjusts parameters of the training model 70 (executes machine learning) by repeatedly executing the above processing, based on the relationship between the "question content vector" and the "common phenomenon vector, specific phenomenon vector, cause vector, and coping vector".

The generation unit 153 is a processing unit that generates data of the response sentence corresponding to the question sentence and transmits the generated data to the terminal device 5 when accepting the data of the question sentence from the terminal device 5. Processing of the generation unit 153 corresponds to the processing described with reference to FIGs. 3 and 4.

An example of processing of the generation unit 153 will be described with reference to FIG. 3. When accepting the question sentence 10 from the terminal device 5, the generation unit 153 converts the question sentence 10 into vectors. For example, the generation unit 153 morphologically analyzes the text included in the question sentence 10 and divides the analyzed text into a plurality of words. The generation unit 153 compares the divided words with the dictionary information D1 to specify the vector of each word and calculates the vectors of the question sentence 10 by integrating the respective vectors of the words.

The generation unit 153 calculates the common phenomenon vector v10-1 and the specific phenomenon vector v10-2 by inputting the vectors of the question sentence 10 to the training model 70. Note that the generation unit 153 does not use the cause vector and the coping vector that can be output from the training model 70.

The generation unit 153 separately compares the common phenomenon vector v10-1 and the specific phenomenon vector v10-2 with the common phenomenon vector and the specific phenomenon vector of each fault report stored in the fault report table 40. As a result of the comparison, the generation unit 153 specifies the fault report 40-1 having similar common phenomenon vector and specific phenomenon vector. For example, when the cos similarity between the vectors is equal to or higher than a threshold value, the generation unit 153 determines that the compared vectors are similar to each other.

For example, the fault report having the common phenomenon vector v40-11 and the specific phenomenon vector v40-12 similar to the common phenomenon vector v10-1 and the specific phenomenon vector v10-2 is assumed as the fault report 40-1. In these circumstances, the generation unit 153 generates the response sentence 20 in which the cause α1 and the coping o2 set in the fault report 40-1 are set and transmits the generated response sentence 20 to the terminal device 5 that is the transmission source of the question sentence 10.

An example of processing of the generation unit 153 will be described with reference to FIG. 4. When accepting the question sentence 11 from the terminal device 5, the generation unit 153 converts the question sentence 11 into vectors. The processing of converting the question sentence 11 into vectors is similar to the above-described processing of converting the question sentence 10 into vectors.

The generation unit 153 calculates the common phenomenon vector v11-1 by inputting the vectors of the question sentence 11 to the training model 70. Note that the generation unit 153 does not specify the specific phenomenon vector when the value of the specific phenomenon vector output from the training model 70 does not fall within a predetermined range. In addition, the generation unit 153 does not use the cause vector and the coping vector that can be output from the training model 70.

The generation unit 153 separately compares the common phenomenon vector v11-1 with the common phenomenon vector of each fault report stored in the fault report table 40. As a result of the comparison, the generation unit 153 specifies the fault reports 40-2 and 40-3 having similar common phenomenon vectors. In this manner, when a plurality of fault reports has been specified, the generation unit 153 generates the response sentence 21 and notifies the terminal device 5 that is the transmission source of the question sentence 11 of the generated response sentence 21. The response sentence 21 includes the specific phenomenon 21a of the fault report 40-2 and the specific phenomenon 21b of the fault report 40-3.

The customer operates the terminal device 5 to check the response sentence 21 and selects the specific phenomenon similar to the phenomenon in the service undergoing the occurrence from among the specific phenomena 21a and 21b to generate the question sentence 12. In the example illustrated in FIG. 4, the customer selects the specific phenomenon 21b to generate the question sentence 12 and transmits the generated question sentence 12 to the generation unit 153 of the information processing device 100.

When accepting the question sentence 12, the generation unit 153 specifies the fault report 40-3 corresponding to the specific phenomenon 21b included in the question sentence 12. The information processing device generates the response sentence 22 in which the cause γ1 and the coping γ2 set in the fault report 40-3 are set and transmits the generated response sentence 22 to the terminal device 5 that is the transmission source of the question sentence 12.

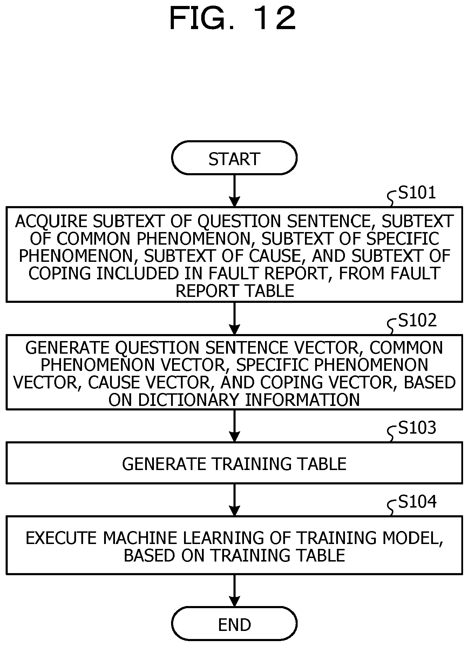

Next, an example of a processing procedure of the information processing device 100 according to the present embodiment will be described. FIG. 12 is a flowchart (1) illustrating a processing procedure of the information processing device according to the present embodiment. As illustrated in FIG. 12, the preprocessing unit 151 of the information processing device 100 acquires, from the fault report table 40, the subtext of the question sentence, the subtext of the common phenomenon, the subtext of the specific phenomenon, the subtext of the cause, and the subtext of the coping included in the fault report (step S101).

The preprocessing unit 151 generates the question sentence vector, the common phenomenon vector, the specific phenomenon vector, the cause vector, and the coping vector, based on the dictionary information D1 (step S102).

The preprocessing unit 151 generates the training table 65 (step S103). The generation unit 153 of the information processing device 100 generates the training model 70, based on the training table 65 (step S104).

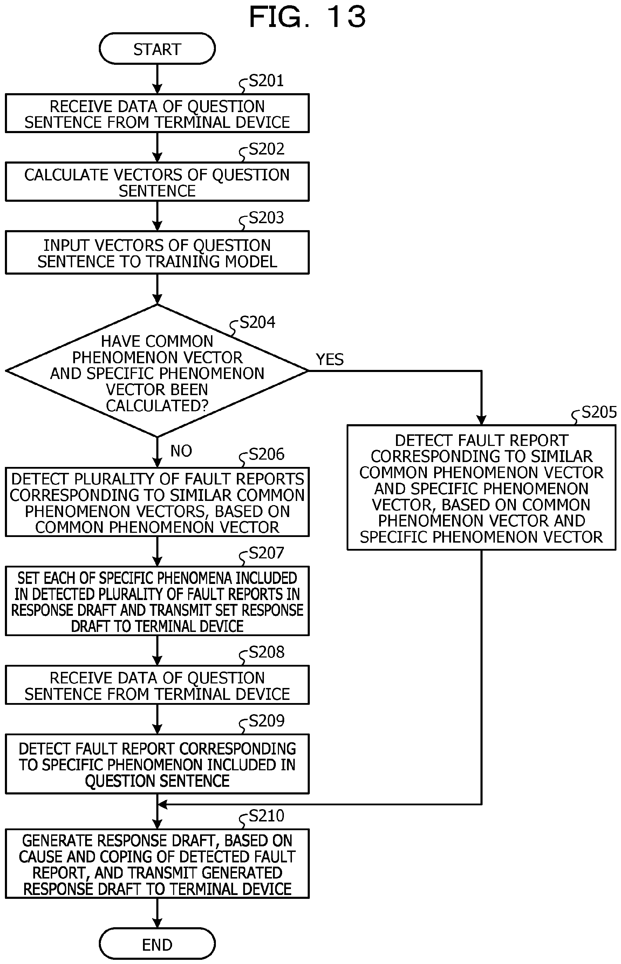

FIG. 13 is a flowchart (2) illustrating a processing procedure of the information processing device according to the present embodiment. As illustrated in FIG. 13, the generation unit 153 of the information processing device 100 receives the data of a question sentence from the terminal device 5 (step S201).

The generation unit 153 calculates vectors of the question sentence (step S202). The generation unit 153 inputs the vectors of the question sentence to the training model 70 (step S203). When the generation unit 153 has calculated the common phenomenon vector and the specific phenomenon vector (step S204, Yes), the generation unit 153 proceeds to step S205. On the other hand, when generation unit 153 has calculated only the common phenomenon vector (step S204, No), the generation unit 153 proceeds to step S206.

The processing in step S205 will be described. The generation unit 153 detects a fault report corresponding to similar common phenomenon vector and specific phenomenon vector, based on the common phenomenon vector and the specific phenomenon vector (step S205), and proceeds to step S210.

The processing in step S206 will be described. The generation unit 153 detects a plurality of fault reports corresponding to similar common phenomenon vectors, based on the common phenomenon vector (step S206). The generation unit 153 sets each of specific phenomena included in the detected plurality of fault reports in a response draft and transmits the set response draft to the terminal device 5 (step S207).

The generation unit 153 receives the data of a question sentence from the terminal device 5 (step S208). The generation unit 153 detects the fault report corresponding to the specific phenomenon included in the question sentence (step S209). The generation unit 153 generates a response draft, based on the cause and coping of the detected fault report, and transmits the generated response draft to the terminal device 5 (step S210).

Next, an effect of the information processing device 100 according to the present embodiment will be described. The information processing device 100 calculates the vector of each subtext of the text data of the question content and the text data of the response content included in the fault report table 40 to generate the training table 65 and executes training of the training model 70. In addition, when accepting a question sentence from a customer, the information processing device 100 uses vectors calculated by inputting the vectors of the question sentence to the training model 70 to specify a fault report having relevant vectors and generates a response sentence. This may enable to efficiently create FAQ.

The information processing device 100 generates the training table 65 from the fault report, based on each of the vectors of the subtext of the question content, the subtext of the common phenomenon, the subtext of the specific phenomenon, the subtext of the cause, and the subtext of the coping, and executes training of the training model 70. By using this training model 70, the vectors of the common phenomenon, the specific phenomenon, the cause, and the coping can be calculated from the vectors of the question content.

The information processing device 100 inputs the vectors of the question sentence to the training model to calculate the common phenomenon vector and the specific phenomenon vector, detects the fault report corresponding to similar common phenomenon vector and specific phenomenon vector, and generates the response sentence, based on the detected fault report. This may enable to efficiently generate a response sentence corresponding to the question sentence.

Note that an example in which the fault reports are created from the troubleshooting histories regarding a software product has been indicated as an embodiment. However, history information corresponding to the fault reports may be generated from troubleshooting histories relating to a hardware product such as a keyboard, a printer, or a hard disk, a medicine, or the like, and processing may be performed in a similar manner to the processing for the fault reports. For example, an operation manual, a package insert, or the like indicates a standard use method, but has no description about a trouble caused by a plurality of errors in operations (dosages), an operating environment (complication), or the like. Therefore, a subtext relating to a trouble caused by a plurality errors in operations, an operating environment, or the like may be extracted from the history information, vectors may be calculated in a similar manner to the above-described subtexts of the common phenomenon, the specific phenomenon, the cause, and the coping, and training of a training model may be executed.

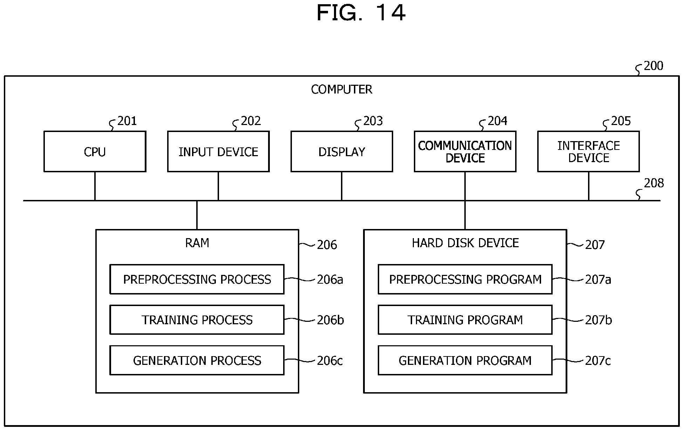

Next, an example of a hardware configuration of a computer that implements functions similar to the functions of the information processing device 100 indicated in the above embodiments will be described. FIG. 14 is a diagram illustrating an example of a hardware configuration of a computer that implements functions similar to the functions of the information processing device according to the embodiments.

As illustrated in FIG. 14, a computer 200 includes a CPU 201 that executes various types of arithmetic processing, an input device 202 that accepts data input from a user, and a display 203. In addition, the computer 200 includes a communication device 204 that exchanges data with an external device or the like via a wired or wireless network, and an interface device 205. The computer 200 also includes a RAM 206 that temporarily stores various types of information, and a hard disk device 207. Additionally, each of the devices 201 to 207 is coupled to a bus 208.

The hard disk device 207 includes a preprocessing program 207a, a training program 207b, and a generation program 207c. In addition, the CPU 201 reads each of the programs 207a to 207c and loads the read programs 207a to 207c into the RAM 206.

The preprocessing program 207a functions as a preprocessing process 206a. The training program 207b functions as a training process 206b. The generation program 207c functions as a generation process 206c.

Processing of the preprocessing process 206a corresponds to the processing of the preprocessing unit 151. Processing of the training process 206b corresponds to the processing of the training unit 152. Processing of the generation process 206c corresponds to the processing of the generation unit 153.

Note that each of the programs 207a to 207c does not necessarily have to be previously stored in the hard disk device 207. For example, each of the programs may be stored in a "portable physical medium" to be inserted into the computer 200, such as a flexible disk (FD), a compact disc read only memory (CD-ROM), a digital versatile disc (DVD), a magneto-optical disk, or an integrated circuit (IC) card. Then, the computer 200 may read and execute each of the programs 207a to 207c.

### CITATION LIST

### PATENT DOCUMENT

Patent Document 1: Japanese Laid-open Patent Publication No. 2002-41573
Patent Document 2: Japanese Laid-open Patent Publication No. 2005-196296

### REFERENCE SIGNS LIST

100 Information processing device
110 Communication unit
120 Input unit
130 Display unit
140 Storage unit
150 Control unit
151 Preprocessing unit
152 Training unit
153 Generation unit

## Claims

1. An information processing program comprising instructions which when executed by a computer, cause the computer to perform processing comprising:
executing preprocessing processing that includes calculating vectors for a plurality of subtexts of text information included in a plurality of pieces of history information in which information on a plurality of question sentences and a plurality of response sentences is recorded;
executing training processing that includes training a training model based on training data that defines relationships between the vectors of some subtexts and the vectors of other subtexts among the plurality of subtexts; and
executing generation processing that includes calculating, when accepting a new question sentence, the vectors of the subtexts by inputting the vectors of the new question sentence to the training model, and generating a response that corresponds to the new question sentence, based on the calculated vectors.

2. The information processing program according to claim 1, wherein the preprocessing processing includes separately calculating the vectors of first subtexts that relate to content of the question sentences, the vectors of second subtexts that relate to the content common to the plurality of question sentences, the vectors of third subtexts that relate to the content specific to one of the question sentences, and the vectors of fourth subtexts that relate to the response sentences, and
the training processing includes executing the training of the training model, based on the training data with the vectors of the first subtexts as the vectors on an input side and the vectors of the second subtexts, the vectors of the third subtexts, and the vectors of the fourth subtexts as the vectors on an output side.

3. The information processing program according to claim 2, wherein the history information is associated with the vectors of the second subtexts and the vectors of the third subtexts, and
the generation processing includes detecting the history information associated with the vectors of the second subtexts and the vectors of the third subtexts similar to the calculated vectors, from the plurality of pieces of history information, and generating the response, based on the detected history information.

4. An information processing method implemented by a computer, the method comprising:
executing preprocessing processing that includes calculating vectors for a plurality of subtexts of text information included in a plurality of pieces of history information in which information on a plurality of question sentences and a plurality of response sentences is recorded;
executing training processing that includes training a training model based on training data that defines relationships between the vectors of some subtexts and the vectors of other subtexts among the plurality of subtexts; and
executing generation processing that includes calculating, when accepting a new question sentence, the vectors of the subtexts by inputting the vectors of the new question sentence to the training model, and generating a response that corresponds to the new question sentence, based on the calculated vectors.

5. The information processing method according to claim 4, wherein the preprocessing processing includes separately calculating the vectors of first subtexts that relate to content of the question sentences, the vectors of second subtexts that relate to the content common to the plurality of question sentences, the vectors of third subtexts that relate to the content specific to one of the question sentences, and the vectors of fourth subtexts that relate to the response sentences, and
the training processing includes executing the training of the training model, based on the training data with the vectors of the first subtexts as the vectors on an input side and the vectors of the second subtexts, the vectors of the third subtexts, and the vectors of the fourth subtexts as the vectors on an output side.

6. The information processing method according to claim 5, wherein the history information is associated with the vectors of the second subtexts and the vectors of the third subtexts, and
the generation processing includes detecting the history information associated with the vectors of the second subtexts and the vectors of the third subtexts similar to the calculated vectors, from the plurality of pieces of history information, and generating the response, based on the detected history information.

7. An information processing device comprising:
a preprocessing unit that calculates vectors for a plurality of subtexts of text information included in a plurality of pieces of history information in which information on a plurality of question sentences and a plurality of response sentences is recorded;
a training unit that executes training of a training model, based on training data that defines relationships between the vectors of some subtexts and the vectors of other subtexts among the plurality of subtexts; and
a generation unit that, when accepting a new question sentence, calculates the vectors of the subtexts by inputting the vectors of the new question sentence to the training model, and generates a response that corresponds to the new question sentence, based on the calculated vectors.

8. The information processing device according to claim 7, wherein the preprocessing unit separately calculates the vectors of first subtexts that relate to content of the question sentences, the vectors of second subtexts that relate to the content common to the plurality of question sentences, the vectors of third subtexts that relate to the content specific to one of the question sentences, and the vectors of fourth subtexts that relate to the response sentences, and
the training unit executes the training of the training model, based on the training data with the vectors of the first subtexts as the vectors on an input side and the vectors of the second subtexts, the vectors of the third subtexts, and the vectors of the fourth subtexts as the vectors on an output side.

9. The information processing device according to claim 8, wherein the history information is associated with the vectors of the second subtexts and the vectors of the third subtexts, and
the generation unit detects the history information associated with the vectors of the second subtexts and the vectors of the third subtexts similar to the calculated vectors, from the plurality of pieces of history information, and generates the response, based on the detected history information.
